# EUROPEAN PATENT APPLICATION

(11) **EP 1 069 073 A2**
(43) Date of publication of application: **17.01.2001**
(21) Application number: 00305596.9
(22) Date of filing: 03.07.2000
(51) Int. Cl.: C01C 3/02

(54) **Process for preparing hydrogen cyanide from nitric oxide and methane**

(30) Priority: 12.07.1999 US 143342 P
(71) Applicant: ROHM AND HAAS COMPANY, Philadelphia, Pennsylvania 19106-2399 (US)
(72) Inventor: Benderly, Abraham, Houston, Texas 77906 (US); Decourcy, Michael Stanley, Houston, Texas 77059 (US)
(74) Representative: Buckley, Guy Julian

(57) **Abstract**

This invention relates to a process for preparing hydrogen cyanide from nitric oxide, a hydrocarbon gas, and optionally ammonia. The process reduces the amount of residual ammonia and provides an improved catalyst service life.

## Description

This invention relates to a process for preparing hydrogen cyanide ("HCN") from nitric oxide ("NO"), methane ("CH₄"), and optionally ammonia ("NH₃"). In particular, the invention relates to a process which utilizes a catalyst and flame chemistry, resulting in a commercially viable, economical process.

HCN is used to make nylon, methyl methacrylate, sodium cyanide, agricultural and pharmaceutical products, and specialty amines. Therefore, there is a great demand for HCN, for instance, in the United States alone, demand for HCN is in excess of two billion pounds annually.

Known processes of preparing HCN have several problems associated with them. Problems associated with these processes include the need to remove residual ammonia and deactivation of catalyst. Therefore, there is a need for a commercially viable process for preparing HCN which does not require the removal of residual ammonia and has a long catalyst service life.

Commercially, HCN is commonly produced by the Andrussow process. In the Andrussow process (see U.S. patent 1,934,838), ammonia, oxygen-containing gas such as air, and hydrocarbon gases such as methane are fed to a reaction system, at ambient or elevated temperature. The reactants are then reacted in the presence of a Pt-containing catalyst at temperatures of 1000°C to 1400°C to produce hydrogen cyanide.

One problem associated with the Andrussow process is that there is a high level of residual ammonia in the exit gas. The residual ammonia will cause polymerization of HCN, therefore it must be removed. Low levels of ammonia in the exit gas may be neutralized through the addition of acid within a purification process. The level of ammonia in the exit gas of the Andrussow process is too high for the HCN to be sent directly to a purification process. Therefore, the exit gas containing residual ammonia must be sent to a separate process for removing the majority of the ammonia and then sent to a purification process.

There are two known methods for removing residual ammonia. The first process requires the addition of acids, such as sulfuric acid, to generate ammonium salts. The ammonium salts generated have little value and create a disposal problem. This process is undesirable because of the cost of sulfuric acid addition and the cost of disposal of the ammonium salts.

The second method for removing residual ammonia requires the use of a mineral acid, such as nitric, phosphoric, or boric acid to complex the ammonia. The ammonia/acid complex is then thermally decomposed to free the ammonia, which is recycled to the process. This process is undesirable because of the high capital cost and high operating cost of thermally decomposing the ammonium/acid complex.

United States Patent No. 2,083,824 described a process for preparing HCN from methane and nitric oxide. A non-porous refractory material coated with a Platinum metal such as Platinum and Rhodium was utilized as a catalyst for the process. The only non-porous refractory materials disclosed contained silica.

One problem with the process is that the catalysts are supported and supported catalysts are difficult to scale up in industrial quantities. The silica supported catalysts also have a short life due to the reducing atmosphere within the HCN reactor. The catalysts used in this process have short service lives due to nitric acid attack and carbon deposition on the surface of the catalyst.

Despite the disclosure of the references, there is a continuing need for a commercially viable process for preparing HCN which minimizes the amount of ammonia in the exit gas and utilizes a commercially available catalyst without the catalyst decomposition problems of the known art.

The present invention provides a process including: providing a catalyst capable of converting nitric oxide, a hydrocarbon gas, and optionally ammonia to hydrogen cyanide; feeding nitric oxide, a hydrocarbon gas, and optionally ammonia to the catalyst; and reacting the nitric oxide, hydrocarbon gas, and optional ammonia in the presence of the catalyst at a pressure selected from atmospheric pressure and greater than atmospheric pressure to form hydrogen cyanide; provided that the formation of nitric acid is minimized by a method selected from: maintaining the reaction system temperature above 180°C, minimizing O₂, minimizing water, and combinations thereof.

As described above, in the first step of the process of the invention, a catalyst is provided. The catalyst may be selected from transition metals, elements from the Lanthanide series of the periodic chart, elements from the Actinium series of the periodic chart, and mixtures thereof. It is preferred that the catalyst be selected from Platinum, Rhodium, Paladium, Nickel, Tin, Cerium, Antimony, Magnesium, Manganese, Iron, Cobalt, Gold, Iridium, Silver, Zinc, Zirconium, Thorium, and mixtures thereof. In a more preferred embodiment, the catalyst may be selected from Platinum, Rhodium, Paladium, Nickel, Tin, and mixtures thereof.

The catalyst may be pure catalyst formed into wire. Preferably, the wire is formed into a gauze. Alternatively, the catalyst may be coated onto a substrate. Preferably, the substrate is porous. The catalyst coated substrate is preferably formed into a gauze.

When the catalyst is coated on a substrate, the amount of catalyst coated on the substrate may range from 0.5 percent by weight to 20 percent by weight, preferably 0.5 percent by weight to 10 percent by weight. The substrates may be selected from, but are not limited to, one or more of the following: silicon dioxide (silica - SiO₂), silicon carbide (SiC), silicon nitride (Si₃N₄), silicon boride, silicon boronitride, aluminum oxide (alumina - Al₂O₃), aluminosilicate (mullite - 3Al₂O₃-2SiO₂), aluminoborosilicate, carbon-fiber, refractory fiber, zirconium oxide (ZrO2), yittrium oxide (Y2O3), calcium oxide (CaO), magnesium oxide (MgO), and Cordite (MgO-Al₂O₃-SiO₂).

In the second step of the process of the invention, NO, a hydrocarbon gas, and optionally ammonia are fed to the catalyst. The source of NO may be a tank of NO or a mixture of NO and diluent, such as one or more of the following: air, oxygen, N₂, or NO₂. These materials are commercially available.

Suitable hydrocarbon gasses include, but are not limited to methane, ethane, propane, butane, acetylene, ethylene, methanol, ethers, and volatile alcohols. Natural gas including methane is preferred. These materials are commercially available.

In an alternative embodiment, the process is a continuous process wherein the NO may be manufactured from ammonia and an oxygen containing gas in a process such as the ammonia oxidation process ("AOP"), as taught by Uhde GmbH and BAMAG processes disclosed in HANDBOOK OF CHEMICALS PRODUCTION PROCESSES, McGraw-Hill Book Company, 1986, chapters 3.4, 3.5, and 3.6 incorporated herein by reference, or variations thereof, then fed to the catalyst or mixed with a hydrocarbon gas and fed to the catalyst where HCN is formed. If the product stream from the AOP step is maintained at a temperature above 180°C, nitric acid formation is minimized. If the NO product stream is blended with other streams, the temperature of the blended stream should also be maintained above 180°C.

Commonly, the AOP process is run in a slight excess of oxygen to ensure high conversion of ammonia. However, if ammonia is fed in excess, there will be residual ammonia in the exit, but Platinum oxide formation in the AOP step will be minimized and nitric acid formation in the HCN formation step will be minimized. Because the reaction to HCN proceeds favorably with a feed of NO and optionally ammonia, the stoichiometry of the ammonia oxidation process may be varied such that either O₂ or NH₃ is in excess, depending on whether AOP catalyst protection or high NH₃ conversion is desired.

A Platinum recovery filter and or "catchment gauze", such as a screen made of Palladium, Gold, Copper, Silver, other metals, or mixtures thereof, both commercially available may be utilized in the AOP process to minimize Platinum loss.

In another embodiment, the NO manufacturing process is enhanced by oxygen enrichment. Oxygen enrichment encompasses the use of pure oxygen and air to generate a greater than 21 percent by volume to 100 percent by volume oxygen containing feed. The stoichiometry of the process may be varied as described above, depending on whether catalyst protection and nitric acid avoidance, or high NH₃ conversion is desired. Oxygen enrichment may provide improved capacity or throughput.

The nitric oxide process may be performed at from 800°C to 1000°C, preferably 820°C to 950°C. A feed mixture containing, but not limited to, ammonia and/or the oxygen containing gas may be fed at room temperature, or optionally pre-heated. The catalyst may be selected from noble metals including Platinum, Rhodium, Palladium, and mixtures thereof. The operating pressure may range from atmospheric to 1500 kPa, preferably from atmospheric to 600 kPa. The reaction is typically run in a molar excess of from 0 to 10% oxygen. The NO exiting is optionally cooled in one or more waste heat recovery exchangers to from 30°C to 300°C, preferably 180°C to 300°C.

The NO, hydrocarbon gas, and optional ammonia optionally may be preheated, and are reacted to form HCN. The reaction may occur at temperatures ranging from 1000°C to 1400°C, preferably 1050°C to 1250°C, more preferably 1100°C to 1250°C.

The molar ratio of hydrocarbon gas to NO may range from 0.5:1 to 2:1, preferably 0.8:1 to 1.8:1, more preferably 1.2:1 to 1.6:1. When ammonia is utilized, the amount of NO will be reduced on a 1:1 molar basis, and 0.5 moles of O₂ will be added for every mole of ammonia added. The source of oxygen may be air, pure oxygen, oxygen containing hydrocarbons, such as methanol, oxides of nitrogen, oxides of carbon, or combinations thereof. The hydrocarbon gas, NO, and optional ammonia may be diluted prior to or while feeding to the catalyst such that the amount of diluent ranges from 0 percent by volume to 75 percent by volume. Suitable diluents are inert gasses such as, but not limited to nitrogen, argon, helium, air, water, steam, carbon dioxide, and mixtures thereof.

The formation of nitric acid in the HCN reaction step is minimized by a method selected from: maintaining the NO feed stream temperature above 180°C, excluding O₂, excluding water, and combinations thereof. Water in the NO feed may be minimized through methods known in the art, including, but not limited to the use of a partial condenser. Water to the HCN reactor may further be limited by minimizing water in the other feed streams, such as purifying the ammonia. If the formation of nitric acid is not minimized, the catalyst will decompose faster than if nitric acid formation is minimized.

Residual ammonia is minimized in the process of this invention. Also, Platinum dioxide is not formed. Therefore, the process of this invention reduces the amount of residual ammonia needed to be removed from the product gas and does not require an intermediate ammonia removal step prior to purification. The process of this invention is commercially viable because the catalyst does not become inactivated due to carbon deposition or Platinum dioxide formation (Platinum loss). As such, commercially available Platinum containing gauze catalysts may be used in the process of the invention.

After the HCN is generated, it may be processed by means known in the art, such as quenching and purifying. Quenching involves cooling of the HCN to prevent decomposition or polymerization. This is generally accomplished through the use of direct or indirect cooling methods. If product HCN is desired, the HCN may be absorbed in water and further purified by means known in the art, such as distillation. Similarly, absorption in caustic may be utilized if sodium cyanide product is desired.

Throughout this specification and claims, unless otherwise indicated, references to percentages are by molar volume and all temperatures are in degree centigrade.

It is also to be understood that for purposes of this specification and claims that the range and ratio limits, recited herein, are combinable. For example, if ranges of 1-20 and 5-15 are recited for a particular parameter, it is understood that ranges of 1-15 or 5-20 are also contemplated.

The following examples are intended to demonstrate the process of the invention, however should not be construed as limiting the scope of the invention.

### Example 1

The reactor was an 18 mm diameter quartz tube reactor containing a 90 percent by weight Platinum/10 percent by weight Rhodium gauze catalyst. The feed stream is described in Table 1. All percentages are in molar percent and ratios are molar ratios. The feed was maintained at 0.6 standard liters per minute of total reactants. The experiment was run first with nitrogen as a diluent, then repeated with argon as a diluent. The two runs were compared by gas chromatography to determine how much nitrogen was generated during the reaction. The peak area of nitrogen from the argon run was then subtracted from the peak area of the nitrogen run. This allowed nitrogen to be the gas chromatography standard. The amount of water was calculated based on the oxygen molar balance. The moles of oxygen fed to the reaction, either as NO or O₂ were added up, then the product moles of CO, CO₂, NO, NO₂, and O₂ were subtracted. The remaining moles were attributed to H₂O. The results are reported in Table 1.

**Table 1**

| Platinum/Rhodium Gauze Catalyst Feed Stream | |
|---|---|
| NO/NH₃ Ratio | 0.11 |
| CH₄/NH₃ Ratio | 1.2 |
| O₂/NH₃ Ratio | 1.1 |
| %N₂ | 36 |
| Reaction Temperature (°C) | 1220 |

| Yields | |
|---|---|
| CH₄:HCN | 74% |
| Effective NH₃:HCN | 71% |

| | |
|---|---|
| * Assumes NH₃:NO Yield = 96% | |

The Example above shows that the addition of NO to the Andrussow process results in good yields of HCN. The Example also shows that oxygen consumption is reduced to approximately one half of that utilized in a conventional Andrussow HCN reaction.

### Example 2

Examples 2A, 2B, 2C, and 2D were run following the procedures described in Example 1 without NH₃ in the feed. The ratio of CH₄ to NO and the reaction temperature was varied. The molar ratios, reaction temperatures, and results are reported in Tables 2A through 2D.

**Table 2A**

| CH₄/NO Ratio = 1.0 Feed Stream | | | |
|---|---|---|---|
| CH₄/NO Ratio | 0.99 | 0.99 | 0.99 |
| %N₂ | 73% | 78% | 65% |
| ReactionTemperature (°C) | 1150 | 1203 | 1287 |

| Yields | | | |
|---|---|---|---|
| NO:HCN | 41% | 17% | 12% |
| CH₄:HCN | 42% | 17% | 12% |

**Table 2B**

| CH₄/NO Ratio = 1.2 Feed Stream | | | |
|---|---|---|---|
| CH₄/NO Ratio | 1.21 | 1.21 | 1.21 |
| %N₂ | 65% | 61% | 62% |
| Reaction Temperature (°C) | 1078 | 1150 | 1162 |

| Yields | | | |
|---|---|---|---|
| NO:HCN | 34% | 41% | 43% |
| CH₄:HCN | 28% | 34% | 36% |

**Table 2C**

| CH₄/NO Ratio = 1.4 Feed Stream | | | | | |
|---|---|---|---|---|---|
| CH₄/NO Ratio | 1.41 | 1.41 | 1.41 | 1.41 | 1.41 |
| %N₂ | 65% | 62% | 49% | 50% | 33% |
| ReactionTemperature (°C) | 966 | 1069 | 1150 | 1162 | 1229 |

| Yields | | | | | |
|---|---|---|---|---|---|
| NO:HCN | 26% | 99% | 74% | 74% | 77% |
| CH₄:HCN | 19% | 71% | 52% | 52% | 55% |

**Table 2D**

| CH₄/NO Ratio = 1.5 Feed Stream | |
|---|---|
| CH₄/NO Ratio | 1.48 |
| %N₂ | 33% |
| Reaction Temperature (°C) | 1162 |

| Yields | |
|---|---|
| NO:HCN | 92% |
| CH₄:HCN | 62% |

Examples 2A, 2B, 2C, and 2D show that good HCN yields may be obtained through a CH₄/NO process. As the Examples were run continuously on the same catalyst, and the catalyst performed well throughout the experiments, it is evident that the process does not generate significant amounts of compounds which attack the catalyst. The ratio of CH₄ to NO and the reaction temperature effect the yield of the process. The Platinum/Rhodium gauze catalyst was utilized for approximately 44 hours during the experiments above. No degradation of the catalyst was noted.

### Example 3

Example 3 was run following the same procedures as the previous Examples, except the reactor was an 18 mm diameter quartz tube reactor containing a 4 percent by weight Platinum on alumina (92 percent Al₂O₃/8 percent SiO₂, 45 pore per inch) foam support. The feed was maintained at 0.6 standard liters per minute of total reactants. The molar ratios, reaction temperatures, and results are reported in Table 3.

**Table 3**

| Platinum On Al₂O₃ Support | | | | |
|---|---|---|---|---|
| CH₄/NO Ratio | 1.20 | 1.00 | 0.82 | 1.18 |
| %N₂ | 0% | 0% | 50% | 50% |
| Reaction Temperature (°C) | 950 | 1090 | 1278 | 1010 |

| Yields | | | | |
|---|---|---|---|---|
| NO:HCN | 26% | 12% | 6% | 31% |
| CH₄:HCN | 22% | 12% | 7% | 26% |

Example 3 shows that the process of the invention also works when the catalyst is loaded on porous substrates.

For small volume consumers of HCN (e.g., agricultural, pharmaceutical, and specialty chemical companies), who have traditionally relied on externally-produced HCN, with its significant transportation safety risks, this new process offers an economically attractive option for self-supplying raw material HCN. Benefits of the process of the invention include the reduction of the need to remove ammonia prior to purification and increased production capacity through the reduction of total moles fed to the reactor. Increased production capacity may be utilized as smaller reactor sizes for a given capacity or increased throughput on existing equipment. In a methane and NO only embodiment, the potential throughput may exceed that obtained in Andrussow processes run with a pure (100%) O₂ feed.

## Claims

1. A process comprising:
providing a catalyst capable of converting nitric oxide, a hydrocarbon gas, and optionally ammonia to hydrogen cyanide;
feeding nitric oxide, a hydrocarbon gas, and optionally ammonia to the catalyst; and
reacting the nitric oxide, hydrocarbon gas, and optional ammonia in the presence of the catalyst at a pressure selected from atmospheric pressure and greater than atmospheric pressure to form hydrogen cyanide;
provided that the formation of nitric acid is minimized by a method selected from: maintaining the nitric oxide feed stream temperature above 180°C, minimizing O₂, minimizing water, and combinations thereof.

2. The process according to claim 1 wherein the catalyst is selected from the group consisting of transition metals, the Lanthanide series of the periodic chart, the Actinium series of the periodic chart, and mixtures thereof.

3. The process according to claim 2 wherein the transition metals are selected from the group consisting of Platinum, Rhodium, Paladium, Nickel, Tin, Cerium, Antimony, Magnesium, Manganese, Iron, Cobalt, Gold, Iridium, Silver, Zinc, and mixtures thereof.

4. The process according to claim 3 wherein the transition metals are selected from the group consisting of Platinum, Rhodium, Paladium, Nickel, and Tin.

5. The process according to claim 1 wherein the catalyst is coated on a porous substrate.

6. The process according to claim 1 wherein the amount of catalyst coated on the substrate is from 0.5 percent by weight to 20 percent by weight and the substrate is selected from the group consisting of alumina and aluminosilicates.

7. The process according to claim 1 wherein the reaction occurs at from 800°C to 1400°C.

8. The process according to claim 1 wherein the nitric oxide, hydrocarbon gas, and optional ammonia are diluted with an inert gas selected from the group consisting of nitrogen, argon, helium, air, water, steam, carbon dioxide, and mixtures thereof.

9. The process according to claim 1 wherein the process is a continuous process wherein the nitric oxide is manufactured from a feed mixture containing ammonia and an oxygen containing gas in an ammonia oxidation process, then fed to the catalyst.

10. The process according to claim 9 wherein the ammonia oxidation process is oxygen enriched.
